# EUROPÄISCHE PATENTSCHRIFT

(11) **EP 3 028 376 B1**
(45) Veröffentlichungstag und Bekanntmachung des Hinweises auf die Patenterteilung: **11.05.2022**
(21) Anmeldenummer: 14745127.2
(22) Anmeldetag: 29.07.2014
(51) Int. Cl.: H02M 1/34, H02M 3/158

(54) **HOCHSETZSTELLER, ENTSPRECHENDER WECHSELRICHTER UND BETRIEBSVERFAHREN**
STEP-UP CONVERTER, CORRESPONDING INVERTER AND METHOD OF OPERATION
CONVERTISSEUR-ÉLÉVATEUR, ONDULEUR CORRESPONDANT ET PROCÉDÉ DE FONCTIONNEMENT

(30) Priorität: 29.07.2013 DE 102013108079
(43) Veröffentlichungstag der Anmeldung: 08.06.2016
(73) Patentinhaber: SMA Solar Technology AG, 34266 Niestetal (DE)
(72) Erfinder: WILLENBERG, Mario, 33102 Paderborn (DE); KNOKE, Raphael, 33184 Altenbeken (DE); FALK, Andreas, 34131 Kassel (DE); STALA, Robert, 31-623 Krakow (PL); RYKLO, Marek, 43-300 Bielsko-Biala (PL); MASLON, Jerzy, 32-500 Chrzanow (PL); MONDZIK, Andrzej, 26-115 Skarysko Koscielne (PL); SZOT, Slawomir, 38-400 Krosno (PL); PENCZEK, Adam, 30127 Krakow (PL); SZAREK, Milosz, 30074 Krakow (PL)
(74) Vertreter: Lahnor, Peter
(86) Internationale Anmeldenummer: PCT/EP2014/066320
(87) Internationale Veröffentlichungsnummer: WO 2015/014866

(56) Entgegenhaltungen:
- WO-A1-94/23488
- WO-A1-2015/079538
- DE-A1- 2 639 589
- DE-C2- 2 639 589
- US-A1- 2006 274 558
- US-A1- 2012 068 678

## Beschreibung

Die Erfindung betrifft einen Hochsetzsteller mit den Merkmalen des Oberbegriffs des unabhängigen Patentanspruchs 1 sowie ein Betriebsverfahren für einen Hochsetzsteller. Weiterhin betrifft die Erfindung einen Wechselrichter, insbesondere einen photovoltaischen Wechselrichter, mit einem solchen Hochsetzsteller.

Hochsetzsteller werden insbesondere in photovoltaischen Anlagen zur Anpassung der Gleichspannung einzelner Strings an die Gleichspannung eines gemeinsamen Zwischenkreises verwendet. Wünschenswert ist hierbei ein Betrieb des Hochsetzstellers mit bestmöglichem Wirkungsgrad, um Energieverluste zu vermeiden und den Aufwand zur Kühlung der Komponenten des Hochsetzstellers, insbesondere eines Halbleiterschalters des Hochsetzstellers, zu reduzieren. Es ist beispielsweise aus Resonanzwandlern bekannt, dass ein verlustarmes Schalten des Halbleiterschalters dadurch erreicht werden kann, dass der Schalter zu Zeitpunkten geschaltet wird, in denen der Schalter stromfrei oder spannungsfrei ist. Dies wird als sanftes Schalten bezeichnet.

Aus der Druckschrift DE 2639589 A1 ist ein Hochsetzsteller mit einer für Hochsetzsteller üblichen Anordnung einer Induktivität, eines Hochsetzstellerschalters und einer Hochsetzstellerdiode zwischen Gleichspannungseingängen und Gleichspannungsausgängen bekannt, der eine Snubberschaltung mit einem Ladepfad und einem Entladepfad aufweist, wobei der Entladepfad als Serienschaltung eines Kondensators und einer Diode parallel zur Hochsetzstellerdiode verläuft. Über den Ladepfad, der eine Serienschaltung einer weiteren Diode und einer weiteren Induktivität umfasst und dessen eines Ende an einem Verbindungspunkt zwischen dem Kondensator und der Diode angeschlossen ist, wird der Kondensator beim Einschalten des Hochsetzstellerschalters aufgeladen, wozu am anderen Ende des Ladepfads eine Spannung in Höhe der halben Ausgangsspannung des Hochsetzstellers angelegt wird. Die Druckschrift DE2639589A1 offenbart hierzu, dass der Ladepfad an den Mittelpunkt einer geteilten Ausgangskapazität zwischen den Gleichspannungsausgängen angeschlossen werden kann und zeigt dazu ferner eine Ausgleichsschaltung mit der eine durch die Ladeschaltung verursachte ungleiche Entladung der beiden Kapazitäten der geteilten Ausgangskapazität ausgeglichen werden kann.

Die Druckschrift US 2006/0274558 A1 offenbart ebenfalls einen Hochsetzsteller mit der für Hochsetzsteller üblichen Anordnung einer Induktivität, eines Hochsetzstellerschalters und einer Hochsetzstellerdiode zwischen Gleichspannungseingängen und Gleichspannungsausgängen, der eine Snubberschaltung mit einem Ladepfad und einem Entladepfad aufweist, wobei der Entladepfad als Serienschaltung eines Kondensators und einer Diode parallel zur Hochsetzstellerdiode verläuft und wobei der Ladepfad, dessen eines Ende an einem Verbindungspunkt zwischen dem Kondensator und der Diode angeschlossen ist, eine Serienschaltung einer weiteren Diode und einer weiteren Induktivität umfasst. Das andere Ende des Ladepfads ist an eine Leitung des Hochsetzstellers angeschlossen, die einen der Gleichspannungseingänge mit einem der Gleichspannungausgänge verbindet. Um den Kondensator beim Einschalten des Hochsetzstellerschalters aufzuladen, ist die weitere Induktivität in dem Ladepfad mit der Induktivität des Hochsetzstellers magnetisch gekoppelt. Die Energie zum Aufladen des Kondensators wird damit aus einer an den Gleichspannungseingängen angeschlossenen Energiequelle entnommen.

Aus der Druckschrift US 2008/0094866 A1 ist es bekannt, einen Hochsetzsteller mit der für Hochsetzsteller üblichen Anordnung einer Induktivität, eines Hochsetzstellerschalters und einer Hochsetzstellerdiode zwischen Gleichspannungseingängen und Gleichspannungsausgängen, der eine aktiv geschaltete Snubberschaltung aufweist, in Verbindung mit einem Photovoltaikgenerator zu verwenden.

Die Druckschrift WO9 4/23488 A1 offenbart ebenfalls einen Hochsetzsteller mit einer ersten Induktivität, einem Hochsetzstellerschalter und einer ersten Diode in einer für Hochsetzsteller üblichen Verschaltung. Der Hochsetzstellerschalter ist dabei nicht direkt, sondern über eine weitere Induktivität an einen Verbindungspunkt zwischen der ersten Induktivität und der ersten Diode angekoppelt. Es werden mehrere verschiedene Ausführungsmöglichkeiten von Snubberschaltungen mit teilweise auch abweichender Anordnung der weiteren Induktivität offenbart, bei denen jeweils eine Aufladung eines zur Schaltentlastung dienenden Snubberkondensators durch die in der weiteren Induktivität gespeicherte Energie erfolgt.

Die Druckschrift US 2012/0068678 A1 offenbart einen Hochsetzsteller mit der für Hochsetzsteller üblichen Anordnung einer Induktivität, eines Hochsetzstellerschalters und einer Hochsetzstellerdiode zwischen Gleichspannungseingängen und Gleichspannungsausgängen und mit einer Snubberschaltung, wobei unter anderem auch eine parallele Verschaltung von zwei Hochsetzstellern offenbart ist.

Aus der Druckschrift WO 2015/079538 A1 ist ein Hochsetzsteller mit der für Hochsetzsteller üblichen Anordnung einer Induktivität, eines Hochsetzstellerschalters, einer Hochsetzstellerdiode und mit einer Snubberschaltung bekannt, bei der eine Serienschaltung eines Kondensators und einer zweiten Diode parallel zur Hochsetzstellerdiode angeordnet ist und bei der ein Ladepfad, dessen eines Ende an einem Verbindungspunkt zwischen dem Kondensator und der zweiten Diode angeschlossen ist, eine Serienschaltung einer weiteren Diode und einer weiteren Induktivität umfasst und mit seinem anderen Ende an einen ersten Gleichspannungseingang angeschlossen ist.

Es ist demzufolge Aufgabe der vorliegenden Erfindung, einen Hochsetzsteller mit verbessertem Wirkungsgrad bereitzustellen, der es insbesondere ermöglicht, einen Halbleiterschalter des Hochsetzstellers sanft zu schalten.

Diese Aufgabe wird erfindungsgemäß gelöst durch den Hochsetzsteller des unabhängigen Anspruchs 1, sowie durch ein Betriebsverfahren eines Hochsetzstellers gemäß dem nebengeordneten Verfahrensanspruch 5, sowie durch einen Wechselrichter gemäß den nebengeordneten Vorrichtungsansprüchen 6 und 7. Vorteilhafte Ausführungsformen der Erfindung sind in den abhängigen Ansprüchen wiedergegeben.

Ein erfindungsgemäßer Hochsetzsteller umfasst eine erste Induktivität, die einen ersten Gleichspannungseingang des Hochsetzstellers mit einem ersten Verbindungspunkt elektrisch verbindet, und einen Hochsetzstellerschalter, der den ersten Verbindungspunkt mit einem zweiten Gleichspannungseingang, sowie einem hiermit verbundenen zweiten Gleichspannungsausgang des Hochsetzstellers verbindet. Zusätzlich umfasst der Hochsetzsteller eine erste Diode, die den ersten Verbindungspunkt mit einem ersten Gleichspannungsausgang des Hochsetzstellers verbindet. Der Hochsetzsteller weist weiterhin eine Snubberschaltung mit einem Ladepfad und einem Entladepfad auf, wobei der Entladepfad als Serienschaltung eines Kondensators und einer zweiten Diode vom ersten Verbindungspunkt zum ersten Gleichspannungsausgang verläuft und der Ladepfad, der eine Serienschaltung einer zweiten Induktivität und einer dritten Diode umfasst, von einem Verbindungspunkt zwischen dem Kondensator und der zweiten Diode ausgehend derart eingerichtet ist, dass der Kondensator beim Einschalten des Hochsetzstellerschalters aufgeladen wird. Diese Aufladung erfolgt ohne den Einsatz weiterer Schalter.

Durch den Entladepfad, der als Serienschaltung des Kondensators und der zweiten Diode ausgeführt ist, wird erreicht, dass der Strom durch die erste Induktivität zum Zeitpunkt des Ausschaltens des Hochsetzstellerschalters zunächst nicht auf die erste Diode kommutiert, wie dies bei einem konventionellen Hochsetzsteller der Fall wäre, sondern auf den Entladepfad, wodurch der Kondensator entladen wird. Erst nach vollständiger Entladung des Kondensators kommutiert der Strom auf die erste Diode. Durch die temporäre Überbrückung der ersten Diode über den Entladepfad wird ein spannungsfreies, also sanftes Ausschalten des Hochsetzstellerschalters erreicht, was die Schaltverluste erheblich reduziert.

Das erneute Aufladen des Kondensators erfolgt über den Ladepfad zu Beginn der Einschaltphase des Hochsetzstellerschalters. Je nach Dauer der Einschaltphase kann hierbei ein teilweises Aufladen oder vorteilhaft ein vollständiges Aufladen bis auf den Spannungswert des Gleichspannungsausganges erfolgen. Die Aufladung des Kondensators erfolgt daher mithilfe der Energie einer Ausgangskapazität, die zwischen dem ersten und zweiten Gleichspannungsausgang angeordnet ist.

Der Entladepfad kann parallel zur ersten Diode angeordnet sein. Alternativ ist es aber auch denkbar, dass die zweite Diode als Teil des Entladepfades zwischen dem ersten Gleichspannungsausgang und der ersten Diode angeordnet ist, so dass die erste Diode mit einem Verbindungspunkt zwischen dem Kondensator und der zweiten Diode und damit mit dem ersten Gleichspannungsausgang über die zweite Diode verbunden ist.

Bei einem erfindungsgemäßen Hochsetzsteller umfasst die Ausgangskapazität eine Serienschaltung eines ersten und eines zweiten Ausgangskondensators, die über einen Zwischenpunkt miteinander verbunden sind. Hierbei verbindet der Ladepfad den Verbindungspunkt zwischen dem Kondensator und der zweiten Diode mit dem Zwischenpunkt der geteilten Ausgangskapazität. Die zweite Induktivität kann hierbei sowohl mit dem Zwischenpunkt der geteilten Ausgangskapazität als auch mit dem Verbindungspunkt zwischen dem Kondensator und der zweiten Diode verbunden sein. In diesem Fall erfolgt die Aufladung des Kondensators mithilfe der Energie des Ausgangskondensators, der mit dem zweiten Gleichspannungsausgang des Hochsetzstellers verbunden ist. Im Folgenden wird auf diesen Ausgangskondensator als die der Snubberschaltung zugeordnete Ausgangskapazität Bezug genommen.

Da durch diese Energieentnahme eine ungleiche Spannungsverteilung zwischen dem ersten und dem zweiten Ausgangskondensator verursacht wird, kann der erfindungsgemäße Hochsetzsteller durch eine ansteuerbare Ausgleichsschaltung ergänzt werden. Eine solche Ausgleichsschaltung kann mindestens einen Ausgleichsschalter umfassen, der den ersten Gleichspannungsausgang ansteuerbar über die zweite Induktivität mit dem Zwischenpunkt der geteilten Ausgangskapazität verbindet. Zusätzlich kann eine Freilaufdiode oder ein weiterer Schalter zwischen dem Verbindungspunkt der zweiten Induktivität mit dem Ausgleichsschalter, sowie dem zweiten Gleichspannungsausgang angeordnet sein.

Um die ungleiche Energieentnahme aus einer geteilten Ausgangskapazität auszugleichen, ist es denkbar, dem Hochsetzsteller einen weiteren Wandler nachzuschalten, der so gesteuert wird, dass er aus dem Kondensator mit der höheren Spannung relativ zum andern Kondensator bevorzugt Energie entnimmt. In einer möglichen Ausführungsform der Erfindung ist beispielsweise am Gleichspannungsausgang des Hochsetzstellers eine sogenannte 3-Level-Brücke, beispielsweise eine NPC-Brücke, angeschlossen, die derart angesteuert wird, dass eine kompensierende Energieentnahme und damit eine Symmetrierung der Spannung zwischen den beiden Ausgangskondensatoren erreicht wird. Selbstverständlich sind auch andere Schaltungen denkbar, die eine kompensierende Energieentnahme aus dem geteilten Zwischenkreis ermöglichen, zum Beispiel eine Versorgungsschaltung für eine Steuereinrichtung des Hochsetzstellers oder eines elektronischen Gerätes, dessen Bestandteil der Hochsetzsteller ist.

Erfindungsgemäß ist der Hochsetzsteller als symmetrischer Hochsetzsteller mit einer ersten und einer zweiten Teileinheit ausgeführt. Jede der beiden Teileinheiten weist erfindungsgemäß eine Snubberschaltung auf, wobei die Snubberschaltungen der Teileinheiten beispielsweise jeweils einem der beiden Ausgangskondensatoren zugeordnet sind, d.h. aus diesen geladen werden. Bei dem symmetrischen Hochsetzsteller können die erste und die zweite Teileinheit auch jeweils getrennte erste und zweite Gleichspannungseingänge aufweisen. Bei gleicher Dimensionierung des Kondensators und der zweiten Induktivität beider Teileinheiten ergibt sich dann eine Symmetrierung der Spannung auch bei unterschiedlichen Eingangsspannungen an den beiden Teileinheiten. Andernfalls kann durch eine geeignet gewählte Differenz der Ansteuerfrequenzen der beiden Teileinheiten eine Symmetrierung erreicht werden. Hierbei wird diejenige Teileinheit, die der Ausgangskapazität mit der geringeren Spannung zugeordnet ist, mit einer gegenüber der anderen Teileinheit verringerten Ansteuerfrequenz betrieben. Grundsätzlich kann ein solcher Hochsetzsteller in symmetrischer Ausführung dadurch betrieben werden, dass die Ansteuerfrequenz der ersten Teileinheit relativ zur Ansteuerfrequenz der zweiten Teileinheit in Abhängigkeit der zwischen der ersten und der zweiten Ausgangskapazität bestimmt wird. Auf diese Weise ist es ebenso möglich, anstatt einer Symmetrierung der Ausgangsspannung auch eine gezielte Asymmetrie der Ausgangsspannung einzustellen und aufrechtzuerhalten.

Bei dem symmetrischen Hochsetzsteller können die beiden ersten Induktivitäten der beiden Teileinheiten auch magnetisch gekoppelt sein. Und selbstverständlich kann bei dem symmetrischen Hochsetzsteller für jede der beiden Teileinheiten auch eine ansteuerbare Ausgleichsschaltung vorhanden sein, so wie sie zuvor beschrieben wurde.

Es ist weiterhin ein Aspekt der Erfindung, ein Betriebsverfahren für den Hochsetzsteller so zu ergänzen, dass eine durch die Snubberschaltung verursachte ungleiche Energieentnahme durch geeignete, insbesondere durch die vorbeschriebenen Maßnahmen kompensiert wird. Idealerweise wird im Rahmen des angepassten Betriebsverfahrens eine Gleichverteilung der Spannung zwischen den in Reihe geschalteten Ausgangskondensatoren angestrebt.

In einer besonders vorteilhaften Ausführungsform umfasst ein Wechselrichter einen erfindungsgemäßen Hochsetzsteller. Hierbei kann der Wechselrichter insbesondere ein photovoltaischer Wechselrichter sein, der eine Leistung von einem oder mehreren photovoltaischen Generatoren, die als Gleichspannung am Eingang oder an Eingängen des Hochsetzstellers anliegt, in eine netzkonforme Wechselspannung zur Einspeisung in ein Energieversorgungsnetz umwandelt. Hierbei ist es denkbar, bei der Ausführung des Hochsetzstellers als symmetrischer Hochsetzsteller mit getrennten Gleichspannungseingängen für eine erste und eine zweite Teileinheit die Gleichspannungseingänge der ersten Teileinheit mit einem ersten Generator und die Gleichspannungseingänge der zweiten Teileinheit mit einem zweiten, vom ersten Generator unterschiedlichen Generator zu verbinden. Getrennte Gleichspannungseingänge liegen im Sinne dieser Anmeldung auch dann vor, wenn die beiden Teileinheiten genau einen gemeinsamen Gleichspannungseingang aufweisen.

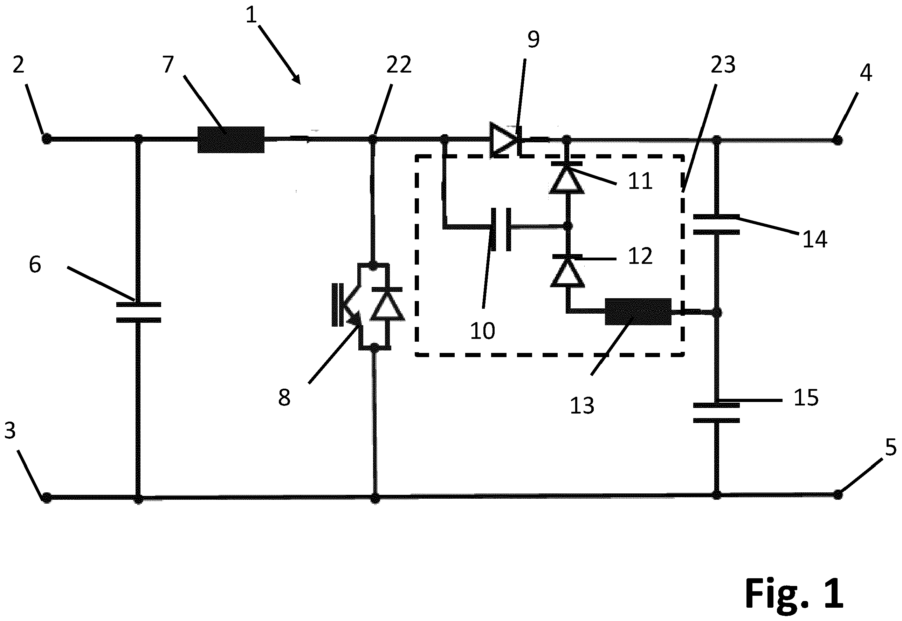

Im Folgenden wird die Erfindung anhand von Figuren näher erläutert. Die Figuren dienen hierbei der Veranschaulichung von Ausführungsformen der Erfindung, beschränken die Erfindung aber nicht auf die gezeigten Merkmale. Dabei zeigen die Figuren 1 bis 3 einzelne Merkmale eines erfindungsgemäßen Hochsetzstellers, um die resultierende Wirkungsweise und Vorteile aufgrund dieser Merkmale zu verdeutlichen, sie zeigen jedoch nicht alle Merkmale eines erfindungsgemäßen Hochsetzstellers und stellen somit keine vollständigen erfindungsgemäßen Hochsetzsteller dar.
Figur 1 zeigt eine Ausführungsform eines Hochsetzstellers,
Figur 2 zeigt eine weitere Ausführungsform eines Hochsetzstellers,
Figur 3 zeigt eine weitere Ausführungsform eines Hochsetzstellers mit einer Ausgleichsschaltung,
Figur 4 zeigt eine Ausführungsform eines erfindungsgemäßen Hochsetzstellers,
Figur 5 zeigt eine weitere Ausführungsform eines erfindungsgemäßen Hochsetzstellers mit einer gemeinsam genutzten Induktivität,
Figur 6 zeigt eine weitere Ausführungsform eines erfindungsgemäßen Hochsetzstellers mit Ausgleichsschaltungen,

Figur 1 zeigt eine Schaltungsanordnung für einen Hochsetzsteller 1 mit einem ersten Gleichspannungseingang 2 und einem zweiten Gleichspannungseingang 3, zwischen denen eine Eingangskapazität 6 angeordnet ist. Zwischen einem ersten Gleichspannungsausgang 4 und einem zweiten Gleichspannungsausgang 5 ist eine Ausgangskapazität in Form einer Serienschaltung eines ersten Ausgangskondensators 14 und eines zweiten Ausgangskondensators 15 angeordnet. Der erste Gleichspannungseingang 2 ist, wie von konventionellen Hochsetzstellern bekannt, über eine erste Induktivität 7 und eine erste Diode 9 mit dem ersten Gleichspannungsausgang 4 verbunden. Ein Verbindungspunkt 22 zwischen der ersten Induktivität 7 und der ersten Diode 9 ist über einen Halbleiterschalter 8 sowohl mit dem zweiten Gleichspannungseingang 3 als auch mit dem zweiten Gleichspannungsausgang 5 verbunden. Zusätzlich weist der Hochsetzsteller 1 eine Snubberschaltung 23 auf, die einen Ladepfad und einen Entladepfad umfasst. Der Entladepfad verläuft ausgehend vom Verbindungspunkt 22 über eine Serienschaltung eines Kondensators 10 und einer zweiten Diode 11 zum ersten Gleichspannungsausgang 4. Der Ladepfad verbindet einen Verbindungspunkt zwischen dem Kondensator 10 und der zweiten Diode 11 über eine Serienschaltung einer dritten Diode 12 und einer zweiten Induktivität 13 mit einem Zwischenpunkt zwischen dem ersten Ausgangskondensator 14 und dem zweiten Ausgangskondensator 15. Die Reihenfolge der Serienschaltung der dritten Diode 12 und der zweiten Induktivität 13 ist beliebig.

Im Betrieb des Hochsetzstellers 1 ist der Kondensator 10 zu einem Zeitpunkt, zu dem der Halbleiterschalter 8 geöffnet wird, ungefähr auf die doppelte Spannung des Ausgangskondensators 15 geladen. Im Folgenden wird der Strom durch die erste Induktivität 7 über den Kondensator 10 und die zweite Diode 11 zum Gleichspannungsausgang 4 weitergeleitet und entlädt den Kondensator 10. Wenn der Kondensator 10 entladen ist, kommutiert der Strom auf die erste Diode 9. Wenn der Halbleiterschalter 8 geschlossen wird, wird der Kondensator 10 mithilfe der Spannung des zweiten Ausgangskondensators 15 über die zweite Induktivität 13, die dritte Diode 12 und den Halbleiterschalter 8 wieder auf die doppelte Spannung des Kondensators 15 aufgeladen. Dies verläuft als resonanter Ladevorgang, wobei der Ladestrom in der Form etwa einer Sinushalbwelle entspricht und die dritte Diode 12 eine Fortsetzung des Resonanzvorgangs, und damit ein Entladen des Kondensators 15 verhindert. Auf diese Weise erreicht die Snubberschaltung 23, dass der Halbleiterschalter 8 spannungsfrei oder zumindest mit gegenüber einem konventionellen Hochsetzsteller ohne Snubberschaltung 23 reduziertem Spannungsabfall über dem Halbleiterschalter 8 geöffnet werden kann. Weiterhin wird ein verlangsamter Stromanstieg im Schalter 8 beim Einschaltvorgang erreicht. Demzufolge verringern sich die Schaltverluste des Halbleiterschalters 8 und der Wirkungsgrad des Hochsetzstellers 1 wird entsprechend verbessert.

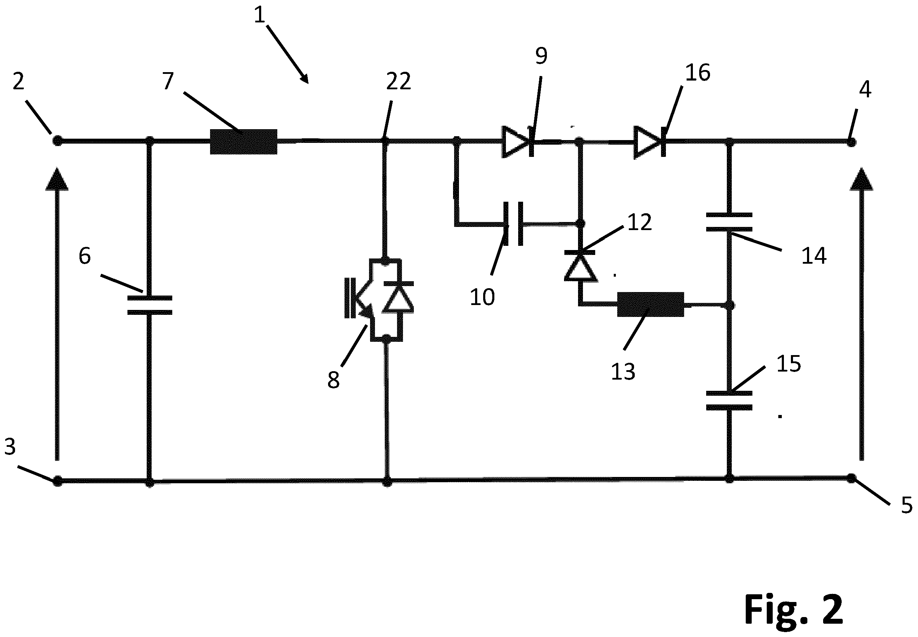

Der Hochsetzsteller 1 entsprechend der Ausführungsform von Figur 2 unterscheidet sich von dem Hochsetzsteller in Figur 1 dadurch, dass anstelle der zweiten Diode 11 eine zweite Diode 16 eingesetzt wird, die zwischen der ersten Diode 9 und dem ersten Gleichspannungsausgang 4 angeordnet ist. Die Wirkungsweise dieser Schaltung ist im Wesentlichen identisch zur Wirkungsweise der Schaltung aus Figur 1.

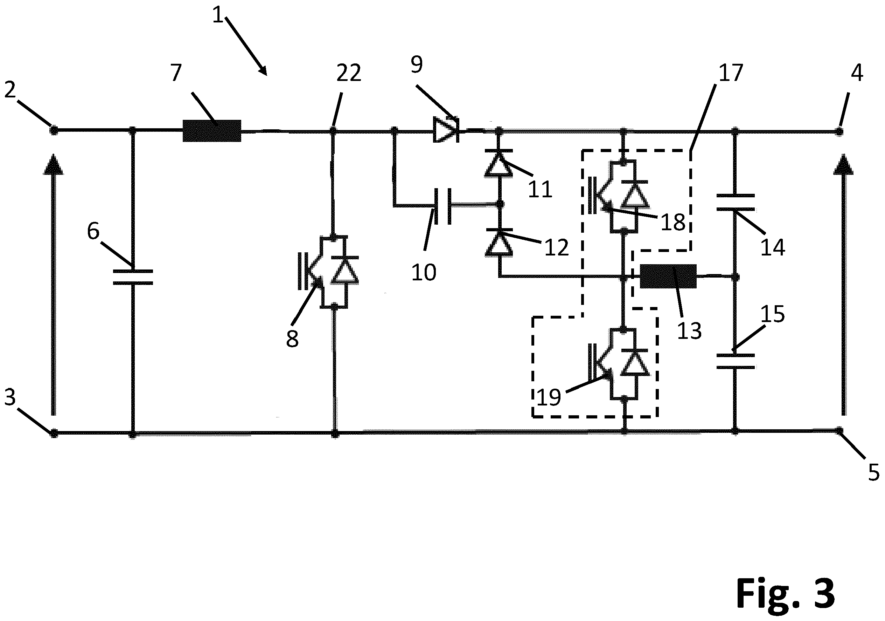

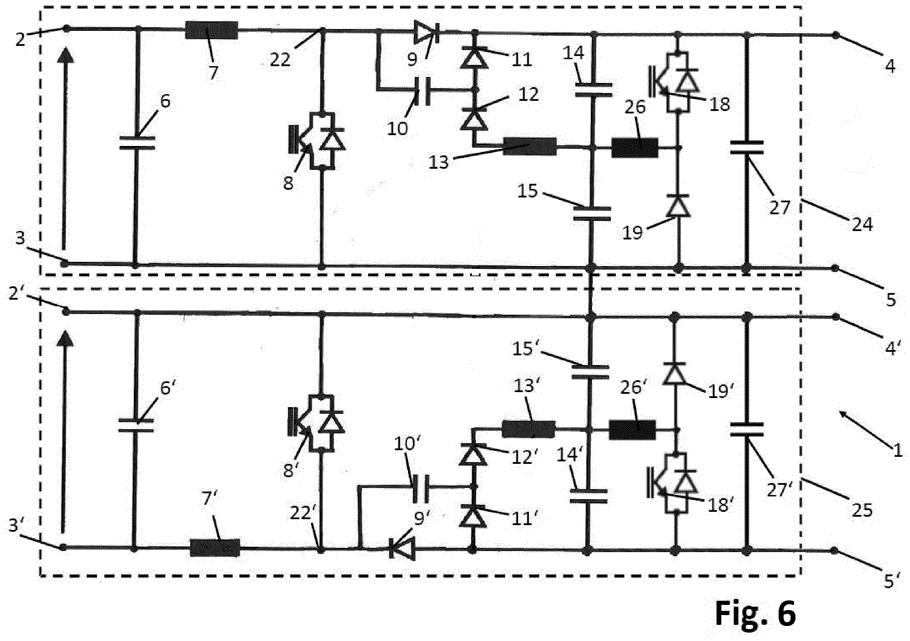

Der Hochsetzsteller 1 entsprechend der Ausführungsform von Figur 3 enthält zusätzlich zum Hochsetzsteller in Figur 1 eine Ausgleichsschaltung 17, die einen ersten Ausgleichsschalter 18 und einen zweiten Ausgleichsschalter 19 aufweist, die zwischen dem ersten Gleichspannungsausgang 4 und dem zweiten Gleichspannungsausgang 5 als Serienschaltung angeordnet sind, und an ihrem Mittelpunkt mit der Verbindung mit dem Verbindungspunkt der dritten Diode 12 und der zweiten Induktivität 13 verbunden sind. Der Ausgleichsschalter 19 kann optional lediglich als Diode ausgebildet sein. Die Ausgleichsschaltung dient dazu, die Spannungsverteilung zwischen dem ersten Ausgangskondensator 14 und dem zweiten Ausgangskondensator 15 auf einen gewünschten Wert einzustellen, insbesondere eine Asymmetrie der Spannungsverteilung aufgrund des Betriebs der Snubberschaltung zu kompensieren. Die Ausgleichsschaltung kann, wie in dem Ausführungsbespiel in Figur 6, statt der Induktivität 13 auch eine separate Induktivität verwenden, die zusätzlich und unabhängig von der Induktivität 13 nur für die Ausgleichsschaltung verwendet wird und über die Ausgleichsschalter 18, 19 ansteuerbar mit dem Zwischenpunkt der Ausgangskondensatoren 14, 15 verbunden ist. Alternativ zur gezeigten Schaltung ist es auch denkbar, den Ausgleichsschalter 18 mit dem ersten Gleichspannungseingang 2 zu verbinden und so den Kondensator 15 eingangsseitig nachzuladen.

Eine weitere, nicht gezeigte Art der Symmetrierung der Spannungsverteilung zwischen den Ausgangskondensatoren besteht darin, an den Ausgang des Hochsetzstellers 1 einen Verbraucher zu platzieren, der die Energie in ungleicher Weise aus den Ausgangskondensatoren entnimmt. In einer Ausgestaltung der Erfindung ist am Ausgang des Hochsetzstellers 1, inklusive des Verbindungspunktes zwischen den zwei Ausgangskondensatoren 14, 15, eine 3-Level-Brücke, beispielsweise ein so genannter NPC-Inverter, angeschlossen. Diese kann so angesteuert werden, dass die Energieentnahme aus den beiden Ausgangskondensatoren die ungleiche Energieverteilung zwischen den Kondensatoren durch den Betrieb des Hochsetzstellers kompensiert.

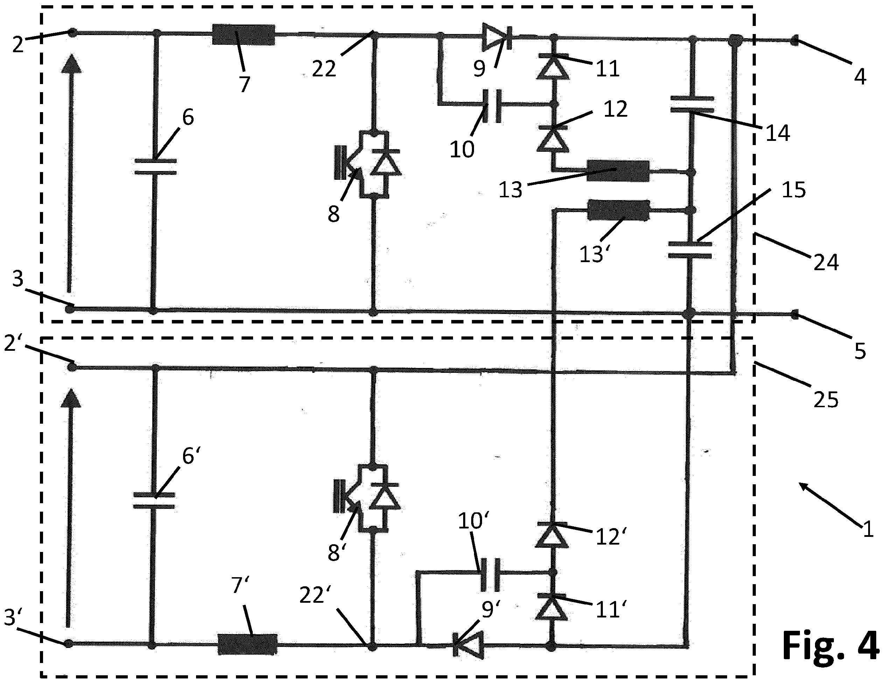

Figur 4 zeigt eine Ausführung eines Hochsetzstellers 1 als symmetrischer Hochsetzsteller mit einer ersten Teileinheit 24 und einer zweiten Teileinheit 25. Die erste Teileinheit 24 entspricht hierbei der Ausführung wie in Figur 1. Die zweite Teileinheit 25 ist gegenüber der ersten Teileinheit 24 in Bezug auf den ersten und den zweiten Gleichspannungseingang gespiegelt. Entsprechend sind die Snubberschaltungen der ersten Teileinheit 24 und der zweiten Teileinheit 25 jeweils einem der beiden Ausgangskondensatoren 14, 15 zugeordnet. Demzufolge kompensiert sich die selektive Energieentnahme der beiden Teileinheiten aus den entsprechend zugeordneten Ausgangskondensatoren, wie oben beschrieben, teilweise oder vollständig. Selbst im Fall, dass an den Gleichspannungseingängen 2, 3 der ersten Teileinheit 24 bzw. den Gleichspannungseingängen 2', 3' der zweiten Teileinheit 25 unterschiedliche Eingangsspannungen anliegen, ergibt sich diese Kompensation, weil die Asymmetrierung der Spannungen über die beiden Ausgangskondensatoren 14 und 15 nicht durch einen unterschiedlichen Leistungsumsatz der Teilschaltungen 24 und 25, sondern durch den Resonanzvorgang und damit durch die Bauteiltoleranzen der Komponenten 10, 10', 13 und 13', sowie durch die Wiederholungsrate des Resonanzvorganges verursacht wird. Der Grad der Kompensation lässt sich demzufolge durch die Wahl der Taktfrequenzen, mit der die beiden Teileinheiten 24, 25 betrieben werden, einstellen, wobei die Teilschaltung, die dem Kondensator mit der höheren Spannung zugeordnet ist, mit einer größeren Taktfrequenz betrieben werden muss. Die Taktfrequenz der Teileinheit, deren Snubberschaltung dem Ausgangskondensator mit einer unerwünscht hohen Spannung zugeordnet ist, kann erhöht werden, um eine gewünschte Spannungsverteilung zwischen den Ausgangskondensatoren zu erreichen. Dies kann zum Beispiel erforderlich werden, weil aufgrund der Bauteiletoleranzen insbesondere der Kondensatoren 10, 10' und der zweiten Induktivitäten 13, 13' eine ungleiche Energieentnahme aus den beiden Ausgangskondensatoren 14, 15 im Betrieb entstehen kann.

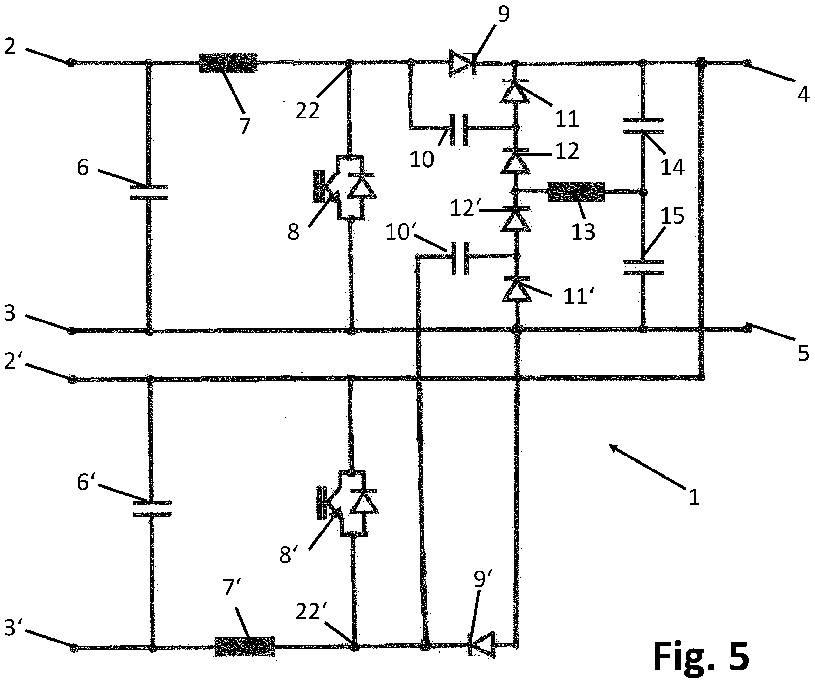

Figur 5 zeigt eine Ausführung eines symmetrischen Hochsetzstellers 1, bei der die zweite Induktivität 13 von beiden Teileinheiten gemeinsam genutzt werden kann. Dies ist insbesondere möglich, wenn die beiden Teileinheiten derart versetzt zueinander getaktet werden, dass die Ladephasen der Kondensatoren 10, 10' zeitlich nicht überlappen.

In Figur 6 ist ein symmetrischer Hochsetzsteller 1 dargestellt, der eine erste Teileinheit 24 und eine zweite Teileinheit 25 aufweist, deren Aufbau jeweils demjenigen des Hochsetzstellers in Figur 3 entspricht. Allerdings sind hier die bereits im Zusammenhang mit der Beschreibung der Figur 3 erwähnten Varianten realisiert, dass die Ausgleichsschalter 19, 19' lediglich als Dioden ausgebildet sind und dass separate Induktivitäten 26, 26' vorgesehen sind, die zusätzlich und unabhängig von den Induktivitäten 13, 13' nur für die Ausgleichsschaltungen verwendet werden und über die Ausgleichsschalter 18, 19 bzw. 18', 19' ansteuerbar mit den Zwischenpunkten der Ausgangskondensatoren 14, 15 bzw. 14', 15' verbunden sind. Die Ausgleichsschaltungen bilden hier erkennbar Tiefsetzsteller, so dass grundsätzlich an dieser Stelle auch beliebige andere Tiefsetzstellerschaltungen einsetzbar sind. Zusätzlich sind bei dem Ausführungsbeispiel in Figur 6 zwischen den Gleichspannungsausgängen 4, 5 und 4', 5' weitere Kapazitäten 27, 27' vorgesehen. In Figur 6 ist ferner exemplarisch gezeigt, dass bei einem symmetrischen Hochsetzsteller die Gleichspannungsausgänge 4, 5 und 4', 5' der ersten und zweiten Teileinheiten 24, 25 auch serienverschaltet sein können, anstatt parallelverschaltet wie beispielsweise bei den Ausführungsformen in den Figuren 4 und 5.

Die Erfindung ist nicht auf die explizit gezeigten Ausführungsformen beschränkt, sondern kann in vielfacher Art und Weise abgewandelt, insbesondere mit anderen gezeigten oder dem Fachmann bekannten Ausführungsformen kombiniert werden.

### Bezugszeichenliste

- 1: Hochsetzsteller
- 2 ,3, 2', 3': Gleichspannungseingang
- 4,5: Gleichspannungsausgang
- 6,6': Eingangskapazität
- 7,7': Induktivität
- 8,8': Halbleiterschalter
- 9,9': Diode
- 10, 10': Kondensator
- 11, 12, 11', 12': Diode
- 13, 13': Induktivität
- 14, 15: Ausgangskondensator
- 16: Diode
- 17: Ausgleichsschaltung
- 18, 19: Ausgleichsschalter
- 20: Widerstand
- 21: Schalter
- 22, 22': Verbindungspunkt
- 23: Snubberschaltung
- 24,25: Teileinheit
- 26, 26': Induktivität

## Patentansprüche

1. Hochsetzsteller (1), ausgeführt als symmetrischer Hochsetzsteller mit einer ersten Teileinheit (24) und einer zweiten Teileinheit (25),
**dadurch gekennzeichnet, dass**
jede der Teileinheiten (24, 25) eine erste Induktivität (7, 7'), die einen ersten Gleichspannungseingang (2, 2') des Hochsetzstellers (1) mit einem ersten Verbindungspunkt (22, 22') elektrisch verbindet, einen Hochsetzstellerschalter (8, 8'), der den ersten Verbindungspunkt (22, 22') mit einem zweiten Gleichspannungseingang (3, 3') und einem zweiten Gleichspannungsausgang (5, 5') des Hochsetzstellers (1) verbindet, eine erste Diode (9, 9'), die den ersten Verbindungspunkt (22, 22') mit einem ersten Gleichspannungsausgang (4, 4') des Hochsetzstellers (1) verbindet, und eine Snubberschaltung (23) mit einem Ladepfad und einem Entladepfad umfasst, wobei der Entladepfad als Serienschaltung eines Kondensators (10, 10') und einer zweiten Diode (11, 11') vom ersten Verbindungspunkt (22, 22') zum ersten Gleichspannungsausgang (4, 4') verläuft und der Ladepfad eine Serienschaltung einer zweiten Induktivität (13, 13') und einer dritten Diode (12, 12') umfasst und von einem Verbindungspunkt zwischen dem Kondensator (10, 10') und der zweiten Diode (11, 11') ausgehend derart eingerichtet ist, dass der Kondensator (10, 10') beim Einschalten des Hochsetzstellerschalters (8, 8') aus einer Ausgangskapazität aufgeladen wird, die zwischen dem ersten und zweiten Gleichspannungsausgang (4, 4', 5, 5') angeordnet ist und eine Serienschaltung eines ersten und eines zweiten Ausgangskondensators (14, 14', 15, 15') mit einem Zwischenpunkt umfasst, und wobei der Ladepfad den Verbindungspunkt zwischen dem Kondensator (10, 10') und der zweiten Diode (11, 11') mit dem Zwischenpunkt des ersten und zweiten Ausgangskondensators (14, 14' 15, 15') verbindet, wobei entweder
- die Snubberschaltungen (23) der Teileinheiten (24, 25) jeweils einem unterschiedlichen der beiden Ausgangskondensatoren (14, 15) zugeordnet sind und eine Steuereinrichtung des Hochsetzstellers dazu eingerichtet ist, eine Ansteuerfrequenz der ersten Teileinheit (24) relativ zu einer Ansteuerfrequenz der zweiten Teileinheit (25) in Abhängigkeit der Spannungsverteilung zwischen dem ersten Ausgangskondensator (14) und dem zweiten Ausgangskondensator (15) zu bestimmen und die Snubberschaltungen (23) der Teileinheiten (24, 25) optional eine gemeinsame zweite Induktivität (13) aufweisen, oder
- ein Zwischenpunkt zwischen der zweiten Induktivität (13) und der dritten Diode (12) über eine ansteuerbare Ausgleichsschaltung (17) mit dem ersten und dem zweiten Gleichspannungsausgang (4, 4', 5, 5') verbunden ist, oder
- der Zwischenpunkt zwischen dem ersten und zweiten Ausgangskondensator (14, 15) über eine ansteuerbare Ausgleichsschaltung (17), die eine separate dritte Induktivität (26. 26') aufweist, mit dem ersten und dem zweiten Gleichspannungsausgang (4, 4', 5, 5') verbunden ist.

2. Hochsetzsteller nach Anspruch 1, wobei die erste Diode (9, 9') über die zweite Diode (11, 11') mit dem ersten Gleichspannungsausgang (4, 4') des Hochsetzstellers (1) verbunden ist.

3. Hochsetzsteller nach Anspruch 1 oder 2, wobei die erste Induktivität (7) der ersten Teileinheit (24) mit der ersten Induktivität (7') der zweiten Teileinheit (25) magnetisch gekoppelt ist.

4. Hochsetzsteller nach einem der Ansprüche 1 bis 3, wobei der erste Gleichspannungseingang (2, 2') oder der zweite Gleichspannungseingang (3, 3') der ersten Teileinheit (24) von dem entsprechenden Gleichspannungseingang der zweiten Teileinheit (25) getrennt ist.

5. Betriebsverfahren für einen Hochsetzsteller nach einem der Ansprüche 1 bis 4, wobei die Snubberschaltungen (23) der Teileinheiten (24, 25) jeweils einem der beiden Ausgangskondensatoren (14, 15) zugeordnet sind und optional eine gemeinsame zweite Induktivität (13) aufweisen, **dadurch gekennzeichnet, dass** eine Ansteuerfrequenz der ersten Teileinheit (24) relativ zu einer Ansteuerfrequenz der zweiten Teileinheit (25) in Abhängigkeit der Spannungsverteilung zwischen dem ersten Ausgangskondensator (14) und dem zweiten Ausgangskondensator (15) bestimmt wird.

6. Wechselrichter, insbesondere photovoltaischer Wechselrichter, umfassend einen Hochsetzsteller (1) nach einem der Ansprüche 1 bis 4.

7. Wechselrichter, insbesondere photovoltaischer Wechselrichter, umfassend einen Hochsetzsteller (1) nach Anspruch 4, wobei Gleichspannungseingänge (2, 3) einer ersten Teileinheit (24) zur Verbindung mit einem ersten Generator und Gleichspannungseingänge (2', 3') einer zweiten Teileinheit (25) zur Verbindung mit einem zweiten, vom ersten Generator unterschiedlichen Generator eingerichtet sind.

## Claims

1. A step-up converter (1), embodied as a symmetrical step-up converter comprising a first subunit (24) and a second subunit (25),
**characterized in that**
each of the subunits (24, 25) comprises a first inductance (7, 7') electrically connecting a first DC voltage input (2, 2') of the step-up converter (1) to a first junction point (22, 22'), a step-up converter switch (8, 8') connecting the first junction point (22, 22') to a second DC voltage input (3, 3') and a second DC voltage output (5, 5') of the step-up converter (1), a first diode (9, 9') connecting the first junction point (22, 22') to a first DC voltage output (4, 4') of the step-up converter (1), and a snubber circuit (23), comprising a charging path and a discharging path, wherein the discharging path runs as series connection of a capacitor (10, 10') and a second diode (11, 11') from the first junction point (22, 22') to the first DC voltage output (4, 4') and the charging path comprises a series connection of a second inductance (13, 13') and a third diode (12, 12') and emanating from a junction point between the capacitor (10, 10') and the second diode (11, 11') is arranged such that the capacitor (10, 10') when the step-up converter switch (8, 8') is switched on is charged from an output capacitance that is arranged between the first and second DC voltage outputs (4, 4', 5, 5') and comprises a series connection of a first and a second output capacitor (14, 14', 15, 15') with an intermediate point, and wherein the charging path connects the junction point between the capacitor (10, 10') and the second diode (11, 11') to the intermediate point of the first and second output capacitors (14, 14', 15, 15'),
wherein either
- the snubber circuits (23) of the subunits (24, 25) are respectively assigned to a different one of the two output capacitors (14, 15) and a control device of the step-up converter is configured to determine a driving frequency of the first subunit (24) relative to a driving frequency of the second subunit (25) depending on the voltage distribution between the first output capacitor (14) and the second output capacitor (15) and the snubber circuits (23) of the subunits (24, 25) optionally comprise a common second inductance (13), or
- an intermediate point between the second inductance (13) and the third diode (12) is connected to the first and second DC voltage outputs (4, 4', 5, 5') via a controllable compensation circuit (17), or
- the intermediate point between the first and second output capacitors (14, 15) is connected to the first and second DC voltage outputs (4, 4', 5, 5') via a controllable compensation circuit (17) comprising a separate third inductance (26, 26').

2. The step-up converter as claimed in claim1, wherein the first diode (9, 9') is connected to the first DC voltage output (4, 4') of the step-up converter (1) via the second diode (11, 11').

3. The step-up converter as claimed in claim 1 or 2, wherein the first inductance (7) of the first subunit (24) is magnetically coupled to the first inductance (7') of the second subunit (25).

4. The step-up converter as claimed in any one of claims 1 to 3, wherein the first DC voltage input (2, 2') or the second DC voltage input (3, 3') of the first subunit (24) is separate from the respective DC voltage input of the second subunit (25).

5. An operating method for a step-up converter as claimed in any one of claims 1 to 4, wherein the snubber circuits (23) of the subunits (24, 25) are respectively assigned to one of the two output capacitors (14, 15) and optionally comprise a common second inductance (13), **characterized in that** a driving frequency of the first subunit (24) relative to a driving frequency of the second subunit (25) is determined depending on the voltage distribution between the first output capacitor (14) and the second output capacitor (15).

6. An inverter, in particular a photovoltaic inverter, comprising a step-up converter (1) as claimed in any one of claims 1 to 4.

7. An inverter, in particular a photovoltaic inverter, comprising a step-up converter (1) as claimed in claim 4, wherein DC voltage inputs (2, 3) of a first subunit (24) are arranged for connection to a first generator and DC voltage inputs (2', 3') of a second subunit (25) are arranged for connection to a second generator different from the first generator.

## Revendications

1. Convertisseur élévateur (1), conçu comme un convertisseur élévateur symétrique avec une première sous-unité (24) et une seconde sous-unité (25),
**caractérisé en ce que**
chacune des sous-unités (24, 25) présente une première inductance (7, 7') qui relie électriquement une première entrée de tension continue (2, 2') du convertisseur élévateur (1) à un premier point de connexion (22, 22'), un commutateur de convertisseur élévateur (8, 8') qui relie le premier point de connexion (22, 22') à une deuxième entrée de tension continue (3, 3') et à une deuxième sortie de tension continue (5, 5') du convertisseur élévateur (1), une première diode (9, 9') qui relie le premier point de connexion (22, 22') à une première sortie de tension continue (4, 4') du convertisseur élévateur (1), et un circuit d'amortissement (23) ayant un chemin de charge et un chemin de décharge, le chemin de décharge fonctionnant comme un circuit série d'un condensateur (10, 10') et d'une deuxième diode (11, 11') depuis le premier point de connexion (22, 22') jusqu'à la première sortie de tension continue (4, 4'), et le chemin de charge comprenant un circuit série d'une deuxième inductance (13, 13') et d'une troisième diode (12, 12') et est disposé à partir d'un point de connexion entre le condensateur (10, 10') et la deuxième diode (11, 11') de telle sorte que le condensateur (10, 10') est chargé à partir d'une capacité de sortie disposée entre les première et deuxième sorties de tension continue (4, 4', 5, 5') lorsque le commutateur de convertisseur élévateur (8, 8') est activé et comprend un montage en série d'un premier et d'un deuxième condensateur de sortie (14, 14', 15, 15') ayant un point intermédiaire, et le chemin de charge connectant le point de jonction entre le condensateur (10, 10') et la seconde diode (11, 11') au point intermédiaire des premier et second condensateurs de sortie (14, 14', 15, 15'),
dans lequel soit
- les circuits d'amortissement (23) des sous-unités (24, 25) sont chacun associés à un condensateur différent parmi les deux condensateurs de sortie (14, 15) et un dispositif de commande de l'élévateur de tension est conçu à cet effet, déterminer une fréquence de commande de la première sous-unité (24) par rapport à une fréquence de commande de la deuxième sous-unité (25) en fonction de la répartition de la tension entre le premier condensateur de sortie (14) et le deuxième condensateur de sortie (15) et les circuits d'amortissement (23) des sous-unités (24, 25) présentent en option une deuxième inductance (13) commune, ou
- un point intermédiaire entre la deuxième inductance (13) et la troisième diode (12) est relié à la première et à la deuxième sortie de tension continue (4, 4', 5, 5') par l'intermédiaire d'un circuit d'équilibrage commandable (17), ou
- le point intermédiaire entre le premier et le deuxième condensateur de sortie (14, 15) est reliée à la première et à la deuxième sortie de tension continue (4, 4', 5, 5') par l'intermédiaire d'un circuit d'équilibrage commandable (17) présentent une troisième inductance séparée (26. 26').

2. Convertisseur élévateur selon la revendication 1, dans lequel la première diode (9, 9') est connectée à la première sortie de tension continue (4, 4') du convertisseur élévateur (1) via la seconde diode (11, 11').

3. Convertisseur élévateur selon la revendication 1 ou 2, dans lequel la première inductance (7) de la première sous-unité (24) est couplée magnétiquement à la première inductance (7') de la seconde sous-unité (25).

4. Convertisseur élévateur selon l'une quelconque des revendications 1 à 3, dans lequel la première entrée de tension continue (2, 2') ou la deuxième entrée de tension continue (3, 3') de la première sous-unité (24) est séparée de l'entrée de tension continue correspondante de la deuxième sous-unité (25).

5. Procédé de fonctionnement d'un convertisseur élévateur selon l'une quelconque des revendications 1 à 4, dans lequel les circuits d'amortissement (23) des sous-unités (24, 25) sont associés chacun à l'un des deux condensateurs de sortie (14, 15) et présentent en option une deuxième inductance (13) commune, **caractérisé en ce qu'**une fréquence de commande de la première sous-unité (24) par rapport à une fréquence de commande de la deuxième sous-unité (25) est déterminée en fonction de la répartition de tension entre le premier condensateur de sortie (14) et le deuxième condensateur de sortie (15).

6. Onduleur, notamment onduleur photovoltaïque, comprenant un convertisseur élévateur (1) selon l'une quelconque des revendications 1 à 4.

7. Onduleur, en particulier onduleur photovoltaïque, comprenant un convertisseur élévateur (1) selon la revendication 4, dans lequel des entrées de tension continue (2, 3) d'une première sous-unité (24) sont disposées pour être connectées à un premier générateur et des entrées de tension continue (2', 3') d'une deuxième sous-unité (25) sont disposées pour être connectées à un deuxième générateur différent du premier générateur.
